# EUROPEAN PATENT SPECIFICATION

(11) **EP 1 231 845 B1**
(45) Date of publication and mention of the grant of the patent: **19.04.2006**
(21) Application number: 00977317.7
(22) Date of filing: 24.11.2000
(51) Int. Cl.: A23L 1/16

(54) **REFRIGERATOR STABLE RAW ALIMENTARY PASTE**
KUEHLSCHRANKSTABILES PASTOESES ROHES LEBENSMITTELPRODUKT
PATES ALIMENTAIRES CRUES STABLES A LA REFRIGERATION

(30) Priority: 24.11.1999 AU PQ421799
(43) Date of publication of application: 21.08.2002
(73) Proprietor: Byron Australia Pty Ltd., Rushcutters Bay, NSW 2011 (AU)
(72) Inventor: LEWIS, David, Adrian, Rosebery, NSW 1445 (AU); LEWIS, Deborah, Ann, Rosebery, NSW 1445 (AU); LEWIS, Victor, Marcus, Rosebery, NSW 1445 (AU)
(74) Representative: Flaccus, Rolf-Dieter
(86) International application number: PCT/AU2000/001429
(87) International publication number: WO 2001/037679

(56) References cited:
- EP-A- 0 868 850
- WO-A-98/48644
- US-A- 4 965 082
- US-A- 5 573 796
- DATABASE WPI Derwent Publications Ltd., London, GB; AN 1996-103951/11, XP002955353 & KR 9 404 886 B (CHEIL SUGAR & CO LTD) 26 February 1992
- LEUNG H.K. ET AL.: 'Storage stability of a puff pastry dough with reduced water activity' J. FOOD SCIENCE vol. 49, 1984, pages 1404 - 1409, XP002955359
- CHEMICAL ABSTRACTS, Columbus, Ohio, US; abstract no. 99:4392, XP002955352 & JP 58 036 362 A (BELL SHOKUSHIN KK) 03 March 1983

## Description

### Field of the Invention

This invention generally relates to a refrigerator stable raw alimentary paste including spaghetti, macaroni, noodles, fettuccine etc. In particular, this invention relates to a raw fresh alimentary paste having extended shelf life under refrigerated conditions and a method of manufacturing same. Further aspects of the invention will become evident from the description which follows.

### Background Art

Traditionally, fresh or raw alimentary pastes such as pasta and noodles have been cooked and eaten within a day or two of preparation, and with a minimum of drying, before spoilage can occur due to yeast, bacteria and mould. Freshly made pasta and noodles can be purchased either uncooked (raw) or cooked. These products are usually prepared from wheat flour, with or without egg or other ingredients. They are highly perishable and must be consumed within a day or so of manufacture.

The wide popularity of pasta as a food and the necessity for shelf-stable economical distribution has resulted in the widespread production of dried pasta products having a moisture content of about 10-12%. The drying of pasta to such low moisture levels requires careful control of humidity and expensive drying equipment. Drying times can also be quite long thereby involving expensive capital equipment and increasing production costs.

Dried pasta products are preferably sufficiently thick in cross-section or have sufficiently thick cross sectional walls as are necessary to give strength for shipping to market and good mouth feel to the pasta when cooked. Such dried pasta products normally take 10 to 20 minutes to cook. With current marketing trends these cooking times are too long to be considered "convenience foods". The present day consumer is generally looking for a product that can be prepared in five minutes or less.

The present trend in food consumption is also towards fresh products. Fresh pasta presents a conceptually desirable image to the consumer, and has a significantly shorter cooking time because it requires less rehydration on cooking.

The development of efficient refrigerated distribution methods has led to the marketing of many types of fresh pasta. Without refrigeration, pasta is very susceptible to mould and bacterial growth. At ambient temperature spoilage can develop within a few days or less. Under efficient refrigeration the shelf-life can be extended by a week or two, and up to about a month. Even with an efficient refrigerated distribution, fresh pasta is still considered to be quite perishable.

Anything that can be done to extend the shelf-life, thereby aiding distribution and safety, would be a benefit as would any reduction in cooking time without a resulting loss of quality.

The use of fungistats such as sorbic acid and sorbates, propionates and such compounds in food products are known, and their use can extend the storage life.

The shelf-life of fresh pasta may also be extended by heat treatment with steam, microwaves or by other such methods prior to packaging. Pasteurisation however adds substantially to the cost of processing and packaging, and can cause undesirable partial cooking or gelatinisation of the pasta Very careful control over microbiological reinfection is also necessary during packaging. The fresh pasta should, be gas packed free of oxygen to deter spoilage by micro-organisms and reduce oxidative changes to colour and flavour. To remain reasonably flexible in a way similar to freshly made pasta, the moisture content should be above about 25%. Such pasta will have a water activity of 0.94-0.98. However, in the absence of oxygen at these water activities growth of anaerobic bacteria such as *Clostridium botulinum* can prove a considerable health hazard.

Lewis *et al.* (US 3,495,989) discloses the steeping of high moisture pasta in saturated brine to extend the shelf-life and reduce the cooking time of the pasta. Physical problems were encountered in handling the product on an industrial scale. There were also effluent problems.

Gaebring *et al.* (US 4,529,609) describes the production of a semi-moist pasta with the addition of salt and partial drying to approximately 16-25% moisture together with gelatinisation to give a product with a maximum water activity of 0.85. To maintain flexibility at these salt and moisture levels, partial gelatinising in steam is required. This then necessitates cooling and drying to achieve the water activity of 0.85 or lower. Drying can take 20-40 minutes. The salt content ranges from 3% to 8%. Salt levels in this range are generally unpalatable and the gelatinisation step is a substantial obstacle to production, both in time, manufacturing control, capital cost and product cost.

It is a preferred object of the present invention to overcome or at least minimise or reduce substantially one or more of the above-mentioned disadvantages of the prior art, or at least to provide the public with a useful choice over existing fresh pasta products.

### Summary of the invention

This invention provides a raw fresh alimentary paste having a water activity (A_{w}) of 0.87-0.92 comprising a raw dough formed into a shape suitable for cooking and consumption, the raw dough comprising flour an aqueous dough-forming agent and a water activity reducing agent in sufficient amount to impart to the alimentary paste stability against microbial growth under refrigeration without gelatinisation

The invention further provides a method of preparing a raw fresh alimentary paste having a water activity (A_{w}) of 0.87-0.92 and stability against microbial growth under refrigeration without gelatinisation, the method comprising the steps of preparing a raw dough from a mixture comprising flour, an aqueous dough-forming agent and a water activity reducing compound in an amount sufficient to impart said stability to the raw dough; and forming the raw dough into a shape suitable for cooking and consumption.

The invention also provides a packaged, raw fresh pasta product stable against microbial growth under refrigeration without gelatinisation comprising an oxygen protective container enclosing an alimentary paste having a water activity (A_{w}) of 0.87-0.92 comprising a raw dough formed into a shape suitable for cooking and consumption, the raw dough comprising flour, an aqueous dough-forming agent and a water activity reducing compound in sufficient amount to impart to the alimentary paste stability against microbial growth without gelatinisation.

The invention further provides a method of making a packaged, raw fresh pasta product stable against microbial growth without gelatinisation and having a water activity (A_{w}) of 0.87-0.92 comprising the steps of preparing a raw dough from a mixture of flour, an aqueous dough-forming agent and a water activity reducing compound in an amount sufficient to impart said stability to the raw dough; preparing an alimentary paste by forming the raw dough into a shape suitable for cooking and consumption; packaging the alimentary paste in a container to protect the alimentary paste from oxygen; and storing the packaged alimentary paste under refrigeration.

Products prepared by the above methods are also provided by this invention.

The raw fresh pasta product of the present invention is not subject to significant deterioration or spoilage for at least 6 months when stored at refrigeration temperatures in the absence of oxygen.

### Detailed description of the invention

The term "alimentary paste" is to be taken in its broadest sense to include pasta, pasta products, noodles, egg noodles or similar products prepared by extruding, forming or sheeting or otherwise shaping a farinaceous dough which has been sufficiently moistened to allow these operations.

The terms "raw" and "fresh" as used herein with reference to alimentary pastes and pasta products are taken in the broader sense to refer to alimentary pastes manufactured without having been substantially dried, canned, cooked, gelatinised or sterilised. Such raw alimentary pastes and pasta products are high in moisture content and are usually marketed in fresh or refrigerated forms.

The dough may be made from wheat semolina or flour and an aqueous dough-forming agent, optionally together with mixtures of such other meals, flours and other ingredients as may be traditionally or alternately used. The aqueous dough-forming agent is typically water, fresh or reconstituted egg products, mixtures thereof, or any other suitable water-containing substance as known to those skilled in the art.

In preparing the dough, other additives may also be used. These include but are not limited to fresh or pasteurised whole eggs and fresh, frozen or dried egg whites and yolks, wheat gluten, protein supplements, gums, emulsifiers, salts, milk solids, soy flours and isolates, flavours, colours, vegetable matter, antioxidants, preservatives and other standard agents known to those skilled in the art.

The raw pasta product of the present invention has a high moisture content and is prepared without drying, or without substantial drying. The pasta also contains a water activity reducing compound such as for example edible salt in an amount sufficient to reduce the water activity to impart stability against microbial spoilage and decomposition. Ideally the water activity (A_{w}) of the pasta is from about 0.87-0.92, whilst the moisture content remains at about 25-35% moisture. Advantages of the higher moisture content include that the pasta product cooks more quickly, remains very flexible and has good flavour, colour and texture when cooked. The lower water activity provides a bacteriologically safe product when packaged according to the invention and kept under refrigeration for extended periods. The packaged raw pasta product is stable against microbiological spoilage for substantial periods, typically greater than one or two months and even up to six months or longer.

In a preferred embodiment, the process of the present invention provides a raw fresh wheat or semolina dough containing from 25% moisture up to about 31% moisture, more typically about 30-31 % moisture. The dough is formed by mixing salt brine or finely powdered salt with semolina flour and water as required at a rate of preferably about 1-4 wt. % salt, more preferably about 2.5 wt. % salt, to the weight of the dough and thoroughly mixing before extrusion or forming. If desired various additives well known in the art, such as gluten, glycerol monostearate, sodium acetate, potassium sorbate, dried vegetable, powders, egg or egg white or other common additives may optionally be added at the mixing stage.

The edible salt used is preferably sodium chloride such as common table salt or sea salt. Other edible salts such as potassium chloride may be used or substituted for part of the common table salt if desired. The salt should be used in an amount such that the water activity of the pasta when packaged will preferably be between 0.87 and 0.92, more preferably about 0.90. At this water activity and at refrigerator temperatures most pathogenic bacteria and microbes which cause food spoilage will not grow. The resultant product made from pasta dough having about a 2.5% salt content represents a salt level in the aqueous phase in the product of about 10%, and even higher than this in the free (unbound) moisture. The resultant pasta is still quite flexible without resorting to gelatinisation. When the pasta is stored at frozen temperatures it will not freeze hard and will not become excessively brittle. When the pasta is made from flour and water, but contains no salt, it typically has a water activity of about 0.96-0.97. The addition of 2.5 wt. % salt to the pasta reduces the water activity to about 0.90. The presence of salt at this level also has a marked effect on reducing the cooking time by facilitating the absorption of water into the pasta, in addition to its microbial protection properties. As compared to a control containing no salt, the pasta containing 2.5% of salt reduces the cooking time by 20-33%. Of course the pasta at 30-31% moisture content containing no salt will spoil readily due to microbial activity, and it will be a health hazard.

After preparation, the dough is extruded, sheeted or otherwise formed as desired into shapes such as for example spaghetti, macaroni, spirals, noodles, fettuccine, lasagne, vermicelli, penne and shells. The pasta may then if necessary be dried minimally and only sufficiently to avoid cohesion. It has been found that this may be achieved by reducing the moisture content by as little as 1% to about 29-30% moisture. This reduction in moisture will normally occur between forming and packaging operations during normal transport to the packaging area without specialised dehydration equipment. If necessary the pasta may be dusted with flour or other meals or agents, or may be coated with about 1-2 wt. % of oil to avoid sticking as is known to a person well skilled in the art.

If the moisture content of the pasta is allowed to dry to about 25% or lower, the pasta loses its flexibility to a great extent, becomes excessively brittle and can break or shatter into smaller pieces on handling. The various packaging operations that are necessary makes it desirable that the moisture content be maintained as high as practicable, preferably at a level of 27% to 30%.

The pasta made in this way represents a very economical method of producing a fresh refrigerator stable pasta as it avoids the necessity of gelatinising and/or pasteurising and substantial drying, and expensive controlled reduction of reinfection during packaging.

The pasta should be packed in packaging with low oxygen and moisture permeability, preferably in an atmosphere of an oxygen free gas such as nitrogen or a mixture of nitrogen and carbon dioxide. This is important in maintaining the fresh colour of the pasta, inhibiting yeast and mould growth and avoiding storage odours that would develop if the product was packed with ready access to oxygen. Oxygen absorbers or active packaging which absorbs oxygen into the packaging film may optionally be used as well known in the art.

Pasta produced and packaged in this way, and refrigerated at about 4°C, will have a shelf-life of up to and greater than six months whilst still retaining the desirable characteristics of fresh pasta.

For use, the pasta ideally should be cooked in about 10 to 15 times its weight of unsalted boiling water until the desired consistency is obtained. This is in line with the normal recommendations for cooking pasta. With a normal 2 mm diameter extruded spaghetti the cooking time is about three to four minutes. The required cooking time may vary with the shape and thickness of the pasta.

During cooking, salt is leached out of the pasta product and into the water giving a cooked pasta with a very good taste and texture. Thus salt addition to the cook water is no longer required. The success of the invention resides in the fresh pasta product having a salt content sufficient to provide stability against microbial growth and product degradation and spoilage, yet not having a content sufficient enough to impart an undesirable salty taste after leaching of salt during cooking.

In order to facilitate an understanding of the invention, reference will be made to the following examples which describe preferred embodiments of the invention. The Examples are not to be construed as limiting the invention in any way.

### Example 1

500 g of durum wheat semolina was mixed with 156 g of water and 16.9 g of salt for about five minutes to prepare a dough. The dough was extruded through a laboratory size "La Parmigiana" pasta extruder equipped with a 2 mm spaghetti die. After extrusion, the pasta was allowed to dry at ambient temperature for about ten minutes. The moisture content was 29.6% and the water activity 0.90 as determined by methods well known in the food industry. The cooking time of the pasta, when boiled in 10-15 times its weight of unsalted water, was three to four minutes. The pasta was packaged in a low oxygen transmission film in a mixture of 60% nitrogen and 40% carbon dioxide and stored under refrigeration at approximately 6°C.

After six months, the pasta had excellent colour, no off-odour and no signs of mould growth. The cooking time for the pasta product which was stored for six months was also three to four minutes, and the flavour and texture was equivalent to the cooked freshly made product above.

### Example 2

400 g of wheat flour, 125 g of water and 2.4 g of salt were mixed for ten minutes to form a dough. After the dough had rested for about 10 minutes, it was sheeted through rollers to produce a sheet 0.4 mm. This was then cut with traditional equipment into noodles 2 mm wide. The water activity of the noodles was 0.91 and the moisture content 29%. The noodles were packed in a low oxygen transmission film in a mixture of nitrogen 60% and carbon dioxide 40%, together with an oxygen absorber ("Ageless" from Mitsubishi Chemical Company, Japan).

After storage for 6 months at 4°C, the noodles were of excellent quality with no evidence of spoilage. The cooking time for the noodles was two minutes in unsalted boiling water, and the flavour and texture was equivalent to cooked pasta that had been freshly prepared.

Those skilled in the art will appreciate that the invention described herein is susceptible to variations and modifications other than those specifically described. It is to be understood that the invention includes all such variations and modifications. The invention also includes all of the steps, features, compositions and compounds referred to or indicated in the specification, individually or collectively, and any and all combinations of any two or more of said steps of features.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps.

The reference to any prior art in this specification is not, and should not be taken as, an acknowledgment or any form of suggestion that that prior art forms part of the common general knowledge in the field of endeavour.

## Claims

1. A raw fresh alimentary paste having a water activity (A_{w}) of 0.87-0.92 comprising a raw dough formed into a shape suitable for cooking and consumption, the raw dough comprising flour, an aqueous dough-forming agent and a water activity reducing agent, wherein the water activity reducing agent is in sufficient amount to impart to the alimentary paste stability against microbial growth under refrigeration for greater than six months without gelatinisation when packaged in a container to protect the alimentary paste from oxygen.

2. An alimentary paste of claim 1, wherein the alimentary paste has a moisture content of 25-31% moisture.

3. An alimentary paste of claim 1 or claim 2, wherein the aqueous dough-forming agent is water, egg or a mixture thereof.

4. An alimentary paste of any of claims 1-3, wherein the water activity reducing agent is an edible salt.

5. An alimentary paste of claim 4, wherein the edible salt is sodium chloride.

6. An alimentary paste of claim 4 or claim 5, wherein the sah content of the alimentary paste is 1-4 wt.%.

7. An alimentary paste of any of claims 1-6, wherein the raw dough further comprises an additive selected from the group consisting of egg, wheat gluten, protein supplements, gums, emulsifiers, milk solids, soy flour and isolates, vegetable matter, flavours, colours, antioxidants and preservatives.

8. An alimentary paste of any of claims 1-7, wherein the shape includes spaghetti, macaroni, spirals, noodles, fettuccine, lasagne, vermicelli, penne and shells.

9. A method of preparing a raw fresh alimentary paste having a water activity (A_{w}) of 0.87-0.92 and stability against microbial growth under refrigeration for greater than six months without gelatinisation when packaged in a container to protect the alimentary paste from oxygen, the method comprising the steps of:
a) preparing a raw dough from a mixture comprising flour, an aqueous dough-forming agent and a water activity reducing compound in an amount sufficient to impart said stability to the raw dough; and
b) forming the raw dough into a shape suitable for cooking and consumption.

10. A method of claim 9, wherein the alimentary paste has a moisture content of 25-31% moisture.

11. A method of claim 9 or claim 10, wherein the aqueous dough-forming agent is water, egg or a mixture thereof

12. A method of any of claims 9-11, wherein the water activity reducing agent is an edible salt.

13. A method of claim 12, wherein the edible salt is sodium chloride.

14. A method of claim 12 or claim 13, wherein the salt content of the alimentary paste is 1-4 wt.%.

15. A method of any of claims 9-14, wherein the raw dough further comprises an additive selected from the group consisting of egg, wheat gluten, protein supplements, gums, emulsifiers, milk solids, soy flour and isolates, vegetable matter, flavours, colours, antioxidants and preservatives.

16. A method of any of claims 9-15, wherein the shape includes spaghetti, macaroni, spirals, noodles, fettuccine, lasagne, vermicelli, penne and shells.

17. A packaged, raw fresh pasta product stable against microbial growth under refrigeration for greater than six months without gelatinisation comprising an oxygen protective container enclosing an alimentary paste having a water activity (A_{w}) of 0.87-0.92 said alimentary paste comprising a raw dough formed into a shape suitable for cooking and consumption, the raw dough comprising flour, an aqueous dough-forming agent and a water activity reducing agent in sufficient amount to impart said stability to the alimentary paste.

18. A method of making a packaged, raw fresh pasta product stable against microbial growth for greater than six months without gelatinisation and having a water activity (A_{w}) of 0.87-0.92 comprising the steps of:
a) preparing a raw dough from a mixture of flour, an aqueous dough-forming agent and a water activity reducing agent in an amount sufficient to impart said stability to the raw dough;
b) preparing an alimentary paste by forming the raw dough into a shape suitable for cooking and consumption,
c) packaging the alimentary paste in a container to protect the alimentary paste from oxygen; and
d) storing the packaged alimentary paste under refrigeration.

19. A method of providing stability to a raw fresh alimentary paste, wherein said alimentary paste has a water activity (A_{w}) of 0.87-0.92 and is stable against microbial growth under refrigeration for greater than six months without gelatinisation when packaged in a container to protect the alimentary paste from oxygen, said method comprising the steps of:
a) preparing a raw dough from a mixture comprising flour, an aqueous dough-forming agent and a water activity reducing agent in an amount sufficient to impart said stability to the raw dough; and
b) preparing the alimentary paste by forming the raw dough into a shape suitable for cooking and consumption.

20. A method of claim 19, wherein the alimentary paste has a moisture content of 25-31 % moisture.

21. A method of claim 19 or claim 20, wherein the water activity reducing agent is an edible salt.

22. A method of claim 21, wherein the edible salt is sodium chloride.

23. A method of claim 21 or claim 22, wherein the salt content of the alimentary paste is 1-4 wt.%.

## Patentansprüche

1. Rohes, frisches pastöses Lebensmittelprodukt mit einer Wasseraktivität (A_{w}) von 0,87-0,92, umfassend einen rohen Teig, der in eine für das Kochen und den Verzehr geeignete Form gebracht wurde und der Mehl, ein wässriges teigbildendes Mittel und ein die Wasseraktivität herabsetzendes Mittel umfasst, wobei das die Wasseraktivität herabsetzende Mittel in ausreichender Menge enthalten ist, um dem pastösen Lebensmittelprodukt unter Kühlungsbedingungen und ohne Gelatinierung für einen Zeitraum von mehr als sechs Monaten eine Beständigkeit gegen mikrobielles Wachstum verleiht, wenn das pastöse Lebensmittelprodukt zum Schutz vor Sauerstoff in einem Behälter verpackt ist.

2. Pastöses Lebensmittelprodukt nach Anspruch 1, das einen Feuchtigkeitsgehalt von 25-31 % Feuchtigkeit aufweist.

3. Pastöses Lebensmittelprodukt nach Anspruch 1 oder 2, bei dem das wässrige teigbildende Mittel Wasser, Ei oder eine Mischung daraus ist.

4. Pastöses Lebensmittelprodukt nach einem der Ansprüche 1-3, bei dem das die Wasseraktivität herabsetzende Mittel ein essbares Salz ist.

5. Pastöses Lebensmittelprodukt nach Anspruch 4, bei dem das essbare Salz Natriumchlorid ist.

6. Pastöses Lebensmittelprodukt nach Anspruch 4 oder Anspruch 5, bei dem der Salzgehalt des pastösen Lebensmittelproduktes 1-4 Gew.-% beträgt.

7. Pastöses Lebensmittelprodukt nach einem der Ansprüche 1-6, bei dem der rohe Teig weiterhin einen Zusatzstoff enthält, der ausgewählt ist aus der Gruppe bestehend aus Ei, Weizenkleber, Proteinzusätzen, Gummen, Emulgatoren, Milchtrockenmasse, Sojamehl und Trennmitteln, pflanzlichen Materialien, Aroma- und Geschmacksstoffen, Farbstoffen, Antioxidantien und Konservierungsmitteln.

8. Pastöses Lebensmittelprodukt nach einem der Ansprüche 1-7, bei welchem die Form die Formen von Spaghetti, Makkaroni, Spiralen, Nudeln, Fettuccine, Lasagne, Vermicelli, Penne und Muscheln umfasst.

9. Verfahren zur Herstellung eines rohen, frischen pastösen Lebensmittelproduktes, das eine Wasseraktivität (A_{w}) von 0,87-0,92 aufweist und das unter Kühlungsbedingungen und ohne Gelatinierung eine Beständigkeit gegen mikrobielles Wachstum für einen Zeitraum von mehr als sechs Monaten aufweist, wenn das pastöse Lebensmittelprodukt zum Schutz vor Sauerstoff in einem Behälter verpackt ist, umfassend die Schritte:
a) Herstellen eines rohen Teiges aus einer Mischung umfassend Mehl, ein wässriges teigbildendes Mittel und eine die Wasseraktivität herabsetzende Verbindung, welche in einer Menge enthalten ist, die ausreicht, um dem rohen Teig die besagte Stabilität zu verleihen; und
b) Formen des rohen Teiges, so dass er eine Form erhält, die für das Kochen und den Verzehr geeignet ist.

10. Verfahren nach Anspruch 9, bei dem das pastöse Lebensmittelprodukt einen Feuchtigkeitsgehalt von 25-31 % Feuchtigkeit aufweist.

11. Verfahren nach Anspruch 9 oder Anspruch 10, bei dem das wässrige teigbildende Mittel Wasser, Ei oder eine Mischung daraus ist.

12. Verfahren nach einem der Ansprüche 9-11, bei dem das die Wasseraktivität herabsetzende Mittel ein essbares Salz ist.

13. Verfahren nach Anspruch 12, bei dem das essbare Salz Natriumchlorid ist.

14. Verfahren nach Anspruch 12 oder Anspruch 13, bei dem der Salzgehalt des pastösen Lebensmittelproduktes 1-4 Gew.-% beträgt.

15. Verfahren nach einem der Ansprüche 9-14, bei dem der rohe Teig weiterhin einen Zusatzstoff enthält, der ausgewählt ist aus der Gruppe bestehend aus Ei, Weizenkleber, Proteinzusätzen, Gummen, Emulgatoren, Milchtrockenmasse, Sojamehl und Trennmitteln, pflanzlichen Materialien, Aroma- und Geschmacksstoffen, Farbstoffen, Antioxidantien und Konservierungsmitteln.

16. Verfahren nach einem der Ansprüche 9-15, bei welchem die Form die Formen von Spaghetti, Makkaroni, Spiralen, Nudeln, Fettuccine, Lasagne, Vermicelli, Penne und Muscheln umfasst.

17. Verpacktes, rohes, frisches pastöses Teigwarenprodukt, das unter Kühlungsbedingungen und ohne Gelatinierung eine Beständigkeit gegen mikrobielles Wachstum für einen Zeitraum von mehr als sechs Monaten aufweist und das einen vor Sauerstoff schützenden Behälter umfasst, welcher ein eine Wasseraktivität (A_{w}) von 0,87-0,92 aufweisendes pastöses Lebensmittelprodukt umschließt, wobei das pastöse Lebensmittelprodukt einen rohen Teig umfasst, welcher so geformt wurde, dass er in einer für das Kochen und den Verzehr geeigneten Form vorliegt, und wobei der rohe Teig Mehl, ein wässriges teigbildendes Mittel und ein die Wasseraktivität herabsetzendes Mittel umfasst, das in einer Menge enthalten ist, die ausreicht, um dem pastösen Lebensmittelprodukt die besagte Stabilität zu verleihen.

18. Verfahren zur Herstellung eines verpackten, rohen, frischen pastösen Teigwarenproduktes, das ohne Gelatinierung für einen Zeitraum von mehr als sechs Monaten gegen mikrobielles Wachstum beständig ist und das eine Wasseraktivität (A_{w}) von 0,87-0,92 aufweist, umfassend die Schritte:
a) Herstellen eines rohen Teiges aus einer Mischung aus Mehl, einem wässrigen teigbildenden Mittel und einem die Wasseraktivität herabsetzenden Mittel, welches in einer Menge enthalten ist, die ausreicht, um dem rohen Teig die besagte Stabilität zu verleihen;
b) Herstellen eines pastösen Lebensmittelproduktes durch Formen des rohen Teiges, so dass er eine Form erhält, die für das Kochen und den Verzehr geeignet ist;
c) Verpacken des pastösen Lebensmittelproduktes in einem Behälter, um das pastöse Lebensmittelprodukt vor Sauerstoff zu schützen; und
d) Lagern des verpackten pastösen Lebensmittelproduktes unter Kühlungsbedingungen.

19. Verfahren zur Stabilisierung eines rohen, frischen pastösen Lebensmittelproduktes, das eine Wasseraktivität (A_{w}) von 0,87-0,92 aufweist und das unter Kühlungsbedingungen und ohne Gelatinierung eine Beständigkeit gegen mikrobielles Wachstum für einen Zeitraum von mehr als sechs Monaten aufweist, wenn das pastöse Lebensmittelprodukt zum Schutz vor Sauerstoff in einem Behälter verpackt ist, umfassend die Schritte:
a) Herstellen eines rohen Teiges aus einer Mischung umfassend Mehl, ein wässriges teigbildendes Mittel und ein die Wasseraktivität herabsetzendes Mittel, welches in einer Menge enthalten ist, die ausreicht, um dem rohen Teig die besagte Stabilität zu verleihen; und
b) Herstellen des pastösen Lebensmittelproduktes durch Formen des rohen Teiges, so dass er eine Form erhält, die für das Kochen und den Verzehr geeignet ist.

20. Verfahren nach Anspruch 19, bei welchem das pastöse Lebensmittelprodukt einen Feuchtigkeitsgehalt von 25 - 31 % aufweist.

21. Verfahren nach Anspruch 19 oder Anspruch 20, bei dem das die Wasseraktivität herabsetzende Mittel ein essbares Salz ist.

22. Verfahren nach Anspruch 21, bei dem das essbare Salz Natriumchlorid ist.

23. Verfahren nach Anspruch 21 oder 22, bei dem der Salzgehalt des pastösen Lebensmittelproduktes 1-4 Gew.-% beträgt.

## Revendications

1. Pâte alimentaire fraîche brute dont l'activité de l'eau (A_{w}) est de 0,87 à 0,92, qui comprend une pâte brute façonnée en une forme qui convient pour la cuisson et la consommation, la pâte brute comprenant de la farine, un agent aqueux de formation de pâte et un agent de réduction de l'activité de l'eau, l'agent de réduction de l'activité de l'eau étant présent en quantité suffisante pour donner à la pâte alimentaire une résistance à la croissance microbienne pendant une réfrigération de plus de six mois sans gélatinisation lorsque la pâte est emballée dans un récipient qui protège la pâte alimentaire de l'oxygène.

2. Pâte alimentaire selon la revendication 1, dans laquelle la pâte alimentaire a une teneur en humidité de 25 à 31 %.

3. Pâte alimentaire selon la revendication 1 ou la revendication 2, dans laquelle l'agent aqueux de formation de pâte est de l'eau, de l'oeuf ou un mélange de ceux-ci.

4. Pâte alimentaire selon l'une quelconque des revendications 1 à 3, dans laquelle l'agent de réduction de l'activité de l'eau est un sel comestible.

5. Pâte alimentaire selon la revendication 4, dans laquelle le sel comestible est le chlorure de sodium.

6. Pâte alimentaire selon la revendication 4 ou la revendication 5, dans laquelle la teneur en sel de la pâte alimentaire est de 1 à 4 % en poids.

7. Pâte alimentaire selon l'une quelconque des revendications 1 à 6, dans laquelle la pâte brute comprend en outre un additif sélectionné dans le groupe constitué des oeufs, du gluten de farine, des suppléments protéinés, des gommes, des émulsifiants, des solides de lait, de la farine et d'isolats de soya, de matière végétale, d'arômes, de colorants, d'agents antioxydants et d'agents de conservation.

8. Pâte alimentaire selon l'une quelconque des revendications 1 à 7, dans laquelle la forme comprend les spaghettis, les macaronis, les spirales, les nouilles, les fettuccine, les lasagnes, les vermicelles, les penne et les coquilles.

9. Procédé de préparation de pâte alimentaire fraîche brute ayant une activité de l'eau (A_{w}) de 0,87 à 0,92 et une résistance à la croissance microbienne pendant une réfrigération de plus de six mois sans gélatinisation lorsqu'elle est emballée dans un conteneur qui protège la pâte alimentaire de l'oxygène, le procédé comportant les étapes qui consistent à :
a) préparer une pâte brute à partir d'un mélange qui contient de la farine, un agent aqueux de formation de pâte et un composé de réduction de l'activité de l'eau en quantité suffisante pour conférer ladite résistance à la pâte brute et
b) façonner la pâte brute en une forme qui convient pour la cuisson et la consommation.

10. Procédé selon la revendication 9, dans lequel la pâte alimentaire a une teneur en humidité de 25 à 31 %.

11. Procédé selon la revendication 9 ou la revendication 10, dans lequel l'agent aqueux de formation de pâte est de l'eau, de l'oeuf ou un mélange de ceux-ci.

12. Procédé selon l'une quelconque des revendications 9 à 11, dans lequel l'agent de réduction de l'activité de l'eau est un sel comestible.

13. Procédé selon la revendication 12, dans lequel le sel comestible est le chlorure de sodium.

14. Procédé selon la revendication 12 ou la revendication 13, dans lequel la teneur en sel de la pâte alimentaire est comprise entre 1 et 4 % en poids.

15. Procédé selon l'une quelconque des revendications 9 à 14, dans lequel la pâte brute comprend en outre un additif sélectionné dans le groupe constitué des oeufs, du gluten de farine, des suppléments protéinés, des gommes, des émulsifiants, des solides de lait, de la farine et d'isolats de soya, de matière végétale, d'arômes, de colorants, d'agents antioxydants et d'agents de conservation.

16. Procédé selon l'une quelconque des revendications 9 à 15, dans lequel la forme comprend les spaghettis, les macaronis, les spirales, les nouilles, les fettuccine, les lasagnes, les vermicelles, les penne et les coquilles.

17. Produit de pâte alimentaire fraîche brute emballée résistant à la croissance microbienne pour une réfrigération d'une durée supérieure à six mois sans gélatinisation comprenant un récipient de protection contre l'oxygène qui enferme une pâte alimentaire dont l'activité de l'eau (A_{w}) est de 0,87 à 0,92, ladite pâte alimentaire comprenant une pâte brute façonnée en une forme qui convient pour la cuisson et la consommation, la pâte brute comprenant de la farine, un agent aqueux de formation de pâte et un agent de réduction de l'activité de l'eau en quantité suffisante pour conférer ladite résistance à la pâte alimentaire.

18. Procédé de fabrication d'un produit emballé de pâte fraîche brute résistant à la croissance microbienne pendant plus de six mois sans gélatinisation et dont l'activité de l'eau (A_{w}) est comprise entre 0,87 et 0,92, lequel procédé comprend les étapes qui consistent à :
a) préparer une pâte brute à partir d'un mélange qui contient de la farine, un agent aqueux de formation de pâte et un composé de réduction de l'activité de l'eau en quantité suffisante pour conférer ladite résistance à la pâte brute,
b) façonner la pâte brute en une forme qui convient pour la cuisson et la consommation,
c) emballer la pâte alimentaire dans un récipient qui protège la pâte alimentaire de l'oxygène et
d) conserver par réfrigération la pâte alimentaire emballée.

19. Procédé pour fournir une stabilité à une pâte alimentaire fraîche brute, ladite pâte alimentaire ayant une activité de l'eau (A_{w}) de 0,87 à 0,92 et résistant à la croissance microbienne pendant une réfrigération d'une durée supérieure à six mois sans gélatinisation lorsqu'elle est emballée dans un conteneur qui protège la pâte alimentaire de l'oxygène, ledit procédé comportant les étapes qui consistent à :
a) préparer une pâte brute à partir d'un mélange qui contient de la farine, un agent aqueux de formation de pâte et un composé de réduction de l'activité de l'eau en quantité suffisante pour conférer ladite résistance à la pâte brute et
b) façonner la pâte brute en une forme qui convient pour la cuisson et la consommation.

20. Procédé selon la revendication 19, dans lequel la pâte alimentaire a une teneur en humidité comprise entre 25 et 31 %.

21. Procédé selon la revendication 19 ou la revendication 20, dans lequel l'agent de réduction de l'activité de l'eau est un sel comestible.

22. Procédé selon la revendication 21, dans lequel le sel comestible est le chlorure de sodium.

23. Procédé selon la revendication 21 ou la revendication 22, dans lequel la teneur en sel de la pâte alimentaire est comprise entre 1 et 4 % en poids.
